# EUROPEAN PATENT APPLICATION

(11) **EP 3 171 313 A1**
(43) Date of publication of application: **24.05.2017**
(21) Application number: 15195563.0
(22) Date of filing: 20.11.2015
(51) Int. Cl.: G06Q 20/30, G06Q 20/32, G06Q 30/00, G06Q 30/02, H04W 4/00

(54) **METHOD AND SYSTEM FOR TRIGGERING ONLINE TRANSACTIONS**

(71) Applicant: MasterCard International Incorporated, Purchase, NY 10577-2509 (US)
(72) Inventor: WARD, Stephen, Wicklow (IE)
(74) Representative: Casey, Alan Michael

(57) **Abstract**

Provided are a computer-implemented method and system for triggering an online transaction in response to a physical activity of a user. The method comprises monitoring the physical activity of the user via at least one sensor; and authorising an online transaction from at least one source account to a recipient account in response to the monitored physical activity matching at least one predetermined characteristic.

## Description

### Field of the Invention

The present disclosure relates to a method and system for triggering online transactions. More particularly, the present disclosure relates to a method and system for triggering online transactions via on payment network in response to a monitored physical acitivity of a user.

### Background of the Disclosure

Mass participation events are becoming ever more popular nowadays. Such events may be arranged in order to raise money for a particular charity or cause. The events may include, but are not limited to, sporting activities such as running, cycling, skiing, horse riding, driving, hiking, walking and swimming. Normally, sponsorship is pledged in advance of the event. The participant may collect the pledged amount in advance of the event or after the event. Typically, a sponsor will pledge an amount of money for the charity or cause in advance of the event with the understanding that the participant will collect the money after the event. Sometimes a sponsor may pledge to sponsor the event participant a certain amount per unit of distance of the event. For example, the sponsor may pledge to sponsor the event participant €1 per kilometre of the event completed by the participant. Often, it may be time consuming to collect the pledged amounts after the event has taken place. Also, it may be cumbersome and complicated to collect cash from multiple sponsors. There is the added difficulty of having to submit the collected cash to the charity or cause. The cash may have to be deposited in a bank account of the event participant initially. Then the money may be required to be transferred to a bank account associated with the charity or cause. Such transfer may take several days which is undesireable. Accordingly, there is a need to provide a method of transacting sponsorship amounts in a safe, secure and speedy manner.

Global Positioning System (GPS) tracking devices are used for a wide range of activities such as training activities, running events, cycling events and the like. These tracking units may be dedicated GPS units. Furthermore, a range of fitness tracking apps are available for smart phones, tablets or watches with GPS capability.

A GPS tracking unit is a device, normally carried by a moving vehicle or person, that uses GPS to determine and track its precise location, and hence that of its carrier, at intervals. The recorded location data can be stored within the tracking unit, or it may be transmitted to a database, server, or computer, using a cellular, radio, or satellite modem embedded in the unit or the data can be downloaded via a wired connection once an event has finished. Accordingly, the location of the vehicle or person can be displayed against a map backdrop either in real time or when analysing the route later, using GPS tracking software. Data tracking software is available for smartphones with GPS capability.

GPS tracking devices can be configured to assist a user in reaching performance goals and completing training sessions by tracking user performance; communicating progress, including progress relative to user-defined goals; communicating navigation directions and waypoints; and storing and analysing training session statistics. Such devices may be used, for example, by a user on a well-defined course or on an undefined course, for land-based activities or water-based activities, and for any combination thereof. A GPS tracking unit generally includes a GPS receiver, a user interface, a processor, a timer, a memory element and a data interface. The GPS receiver provides geographic location information based on signals received from one or more orbiting satellites.

The user interface allows the user to provide input to a processor via an input of the user interface, and to allow the processor to communicate with the user via an output of the interface. The processor receives and processes information from the GPS receiver, from the input of the user interface, and from the input of the data interface and provides information via the output of the user interface and the output of the data interface. The timer is used for monitoring time and the memory element is used to store information. The data interface allows a user to transfer information to or from a computing device.

As the above description shows, GPS tracking devices are useful to employ in sporting events. An improved method and system for conducting transactions is desirable which addresses at least some of the drawbacks of the prior art.

### Summary of the Invention

According to an aspect of the invention, there is provided a computer-implemented method for triggering an online transaction in response to a physical activity of a user, the method comprising:
monitoring the physical activity of the user via at least one sensor; and
authorising an online transaction from at least one source account to a recipient account in response to the monitored physical activity matching at least one predetermined characteristic.

In one embodiment, the at least one predetermined characteristic comprises at least one of: a distance parameter, a time parameter, a personal best parameter, a speed parameter, a measured parameter, an acceleration parameter, a deceleration parameter, a tracked parameter, a progress parameter, a heart rate parameter, a biological parameter, or an altitude parameter.

In an embodiment, the at least one predetermined characteristic is set by a sponsor associated with the source account.

In an exemplary embodiment, the physical activity is monitored in real-time.

In one embodiment, the physical activity is monitored using one or more sensors. In one arrangement, at least one of the one or more sensors are carried by the user while the user completes the physical activity. In an additional or alternative arrangement, at least one of the one or more sensors are located remotely of the user. In at least one embodiment the one or more sensors may be arranged to determine changes in the user's position. Advantageously, at least one of the at least one sensor is a global positioning sensor (GPS).

In an embodiment, the method further comprises comparing the monitored physical activity with the at least one predetermined characteristic.

In an exemplary embodiment, the online transaction is triggered in real-time once the monitored physical activity matches the at least one predetermined characteristic. Alternatively, the online transaction is triggered after a time delay from when the monitored physical activity matches the at least one predetermined characteristic.

In one embodiment the method includes updating a social media platform to indicate a status of the online transaction. Advantageously, updating the social media platform comprises publishing information indicative of the status of the online transaction to a social media account of the user. In an embodiment, updating the social media platform comprises publishing information indicative of the status of the online transaction to a social media account of a sponsor associated with the source account.

In an embodiment, the monitored physical activity comprises progress data.

In an exemplary embodiment, the online transaction includes an amount calculated based on the monitored physical activity of the user. Advantageously, the online transaction includes an amount calculated based on the progress data.

In one embodiment, the predetermined characteristic is set by a sponsor associated with the source account. Advantageously, the predetermined characteristic is set by the sponsor using an online interface.

In an embodiment, authorising the online transaction comprises:
receiving payment details from the one or more sponsors;
transmitting the payment details to a financial transaction facilitator; and
transmitting an authorisation request to a financial institution of the one or more sponsors.

The present disclosure also relates to a computing system configured for triggering an online transaction in response to a physical activity of a user, the computing system comprising:
a memory; and
one or more processors configured to:
   monitor the physical activity of the user via at least one sensor; and
   authorise an online transaction from at least one source account to a recipient account in response to the monitored physical activity matching at least one predetermined characteristic via a payment network.

Additionally, the present disclosure relates to a computer-readable medium comprising non-transitory instructions which, when executed, cause one or more processors to carry out a method comprising:
monitoring a physical activity of a user via at least one sensor; and
authorising an online transaction from at least one source account to a recipient account in response to the monitored physical activity matching at least one predetermined characteristic.

### Brief Description of the Drawings

Embodiments of the present disclosure will now be described, by way of example only, with reference to the accompanying drawings, in which:
Figure 1 illustrates a block diagram of a system for triggering online transactions in accordance with an exemplary embodiment;
Figure 2 is a flowchart diagram illustrating a method for triggering online transactions in accordance with an exemplary embodiment;
Figure 3 is a diagram depicting an example of social media updates displayed on a mobile device, according to an exemplary embodiment;
Figure 4 is a block diagram illustrating an exemplary configuration of a mobile device according to an exemplary embodiment; and
Figure 5 is a block diagram illustrating an exemplary configuration of a server computing device, according to an embodiment of the present disclosure.

### Detailed Description

Embodiments of the present disclosure will now be described with reference to an exemplary method and system for triggering an online transaction in response to a physical activity of a user. It will be understood that the exemplary system is provided to assist in an understanding of the present teaching and is not to be construed as limiting in any fashion. Furthermore, modules or elements that are described with reference to any one figure may be interchanged with those of other figures or other equivalent elements without departing from the spirit of the present teaching.

The present disclosure provides a computer-implemented method for triggering an online transaction in response to a physical activity of a user. The method is performed by a computing device and comprises operating one or more processors to monitor the physical activity of the user; and to authorise an online transaction from at least one source account to a recipient account in response to the monitored physical activity matching at least one predetermined characteristic. In an exemplary arrangment, the method comprises tracking the progress of an event participant during a particular event and effecting sponsorship transactions during the event according to the progress of the event participant. The progress may be tracked using one or more sensors such as a geospatial sensor with a GPS receiver. The event may be any sporting activity, such as a running, cycling, skiing, horse riding, driving, hiking, walking or swimming event, etc. The geospatial sensor may be installed in a dedicated GPS fitness tracking device or a GPS-enabled mobile device such as a smart phone or tablet.

A sponsor may opt to donate an amount from a source account associated with the sponsor to a recipient account associated with a charity based on the event participant acheiving at least one predetermined characteristic during the event. The at least one predetermined characteristic may comprise at least one of a distance parameter, a time parameter, a personal best parameter, a speed parameter, a measured parameter, an acceleration parameter, a deceleration parameter, a tracked parameter, a progress parameter, a heart rate parameter, a biological parameter, or an altitude parameter. For example, the event may be a marathon with a distance of 42 km. In another example, the event may comprise climbing a specific mountain such as Kilimanjaro with specific GPS coordinates. Other event characteristics may include altitude. The geospatial sensor is configured to track the progress of the event participant as they participate in the event. As the event participant progresses through the event, donations from sponsor are transacted according to when the participant reaches certain milestones associated with the event. For instance, for a distance event, donations may be transacted to the event participant as the participant reaches certain intermediate distances along the route. The greater the distance covered by the participant, the greater the sponsorship received. If the participant completes the event, i.e., the entire distance of the route, the participant may receive all the sponsorship pledged. Transactions from an account of the sponsors to an account of the participant may be effected in real time while the event is in progress or after a time delay once the event has been completed. The donations may be made to a bank account of the event participant or a bank account associated with the event or charity.

In an exemplary arrangement, a user or event participant decides to enter a charity event. The event may be a sporting event such as a running or cycling event comprising a predetermined distance to be covered. The user hereinafter referred to as the participant advertises on social media that they are doing the event for a particular charity and would like sponsorship through an online platform. Friends and contacts of the participant may then sponsor the participant based on a parameter associated with the participant such as a unit of distance travelled, for example €5 per mile or €5 per KM. As the event progresses, social media accounts of the friends and contacts are updated with status information indicative of how far the participant has progressed and the total amount sponsored based on tracked progress data of the participant. In this way, the social media platform may be used to indicate the status of the online transaction. For example, updating the social media platform may include publishing information indicative of the status of the online transaction to a social media account of the event participant. Also, updating the social media platform may include publishing information indicative of the status of the online transaction to a social media account of a sponsor associated with the source account. The status of the online transaction may include an amount calculated based on the monitored physical activity or progress data, for example.

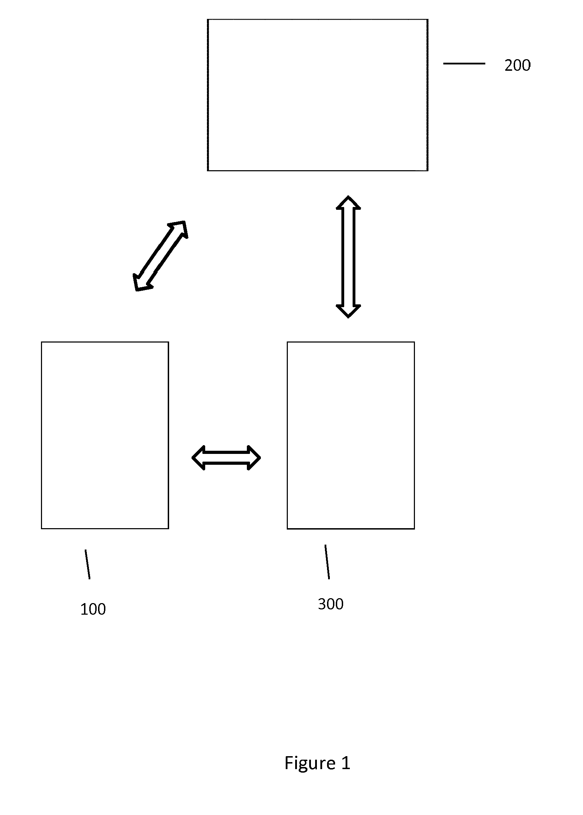

Figure 1 illustrates an exemplary system for triggering an online transaction in response to a physical activity of a user. In the preferred arrangement, the user is a participant in a charity event such as a 10km race. The system comprises a mobile device 100 associated with the event participant, a networked computing device 300 associated with a sponsor, and a server computing device 200, all configured to communicate with each other. The event participant may enter details of an event they are entering on the mobile device 100. The present disclosure is not limited thereto, and the event participant may enter details of an event they are entering on any suitable networked computing device. The friends and contacts of the event participant may sponsor the event participant via the computing device 300. The computing device 300 may be any suitable networked computing device that can access the Internet, such as a desktop, laptop, tablet or mobile device. The server computing device 200 may be configured to post the event details to a social media account of the event participant, allow one or more sponsors to pledge a donation to the event participant; and post the pledge details to a social media account of the one or more sponsors.

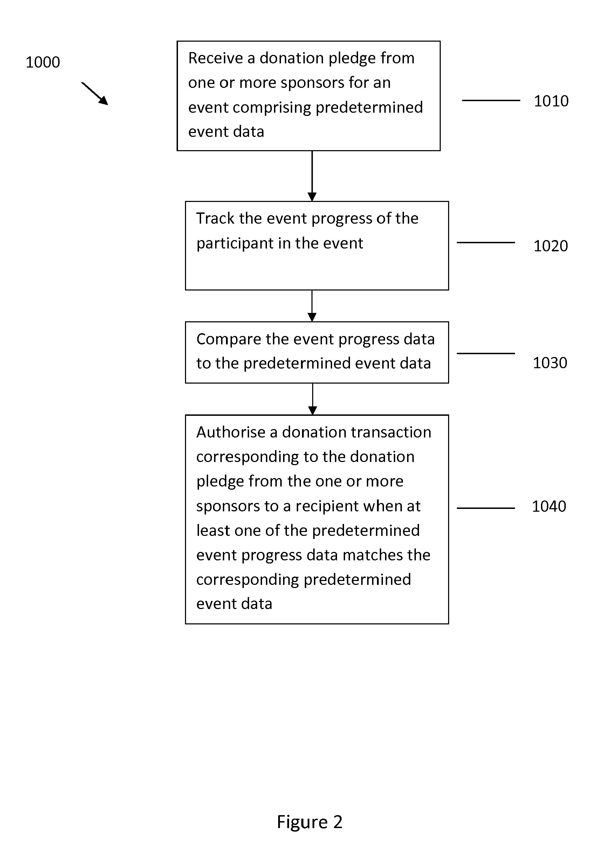

Figure 2 is a flowchart diagram illustrating a method 1000 for triggering an online transaction in response to a monitored physical activity of an event participant, in accordance with an exemplary embodiment. The method 1000 may comprise receiving a donation pledge from one or more sponsors for an event including at least one predetermined characteristic such as a distance parameter that an event participant needs to complete before a donation will be made by the sponsors. The method may comprise tracking the progress of the participant in the event via a geospatial sensor or using some other means. The method may comprise collecting progress data indicating the progress of the participant in the event 1020. The method may comprise comparing the progress data with the predetermined characteristic 1030. The method may comprise authorising an online transaction corresponding to the donation pledge from at least one source account to a recipient account in response to the progress data matching the predetermined characteristic 1040.

In an exemplary arrangement, a person decides to enter a charity event. The person hereinafter referred to as a participant may enter details of the event through a secure website. The event data may include one or more of:
▪ Date of the event
▪ Time of the event
▪ Location of the event
▪ GPS coordinates of a location associated with the event
▪ Distance of a route associated with the event
▪ Altitude of a location associated with the event
▪ Social Media Account details of the event participant
▪ Designated charity or cause

The event details may be posted to the social media account of the participant, i.e., the user, with a link to the secure website. For example (I am running the Bay 5K race and raising funds for Shoreline Cancer Care. You can sponsor me here for every KM ran.) Contacts of the participant can access the secure website on the computing device 300 and register their details. Contacts of the event participant may include social media friends. A sponsor can register their personal details, with their payment information and their sponsorship pledge. The sponsor may pledge to donate a certain amount for the event participant based on the participant's progress through the event. The sponsor may provide a bank card number together with other card details (such as card expiry date, card code verification (CCV) number, etc.) identifying the sponsor to a merchant. For example, for an event comprising a route to be covered, one or more contacts may pledge to sponsor the event participant €X per unit of the distance to be covered, e.g. €1 per km. The pledge details may be posted to a social media account of the sponsor. For example (John is running the Bay 5K race and raising funds for Shoreline Cancer Care. I sponsored him using this platform for every KM ran.)

The method and system may be primarily aimed at users of mobile devices such as smartphones. For example, the method may be embodied as part of an application or 'event donator' app configured for mobile devices. On the day of the event the event participant may use the 'event donator' app on the mobile device 100 as they progress through the event. The mobile device 100 may comprise a GPS-enabled smartphone to track the distance covered by the participant in an event comprising a route to be covered. In other embodiments, the mobile device 100 may be a dedicated GPS tracking device. The 'event donator' app may comprise GPS tracking capability. A detailed embodiment of the mobile device 100 is provided below.

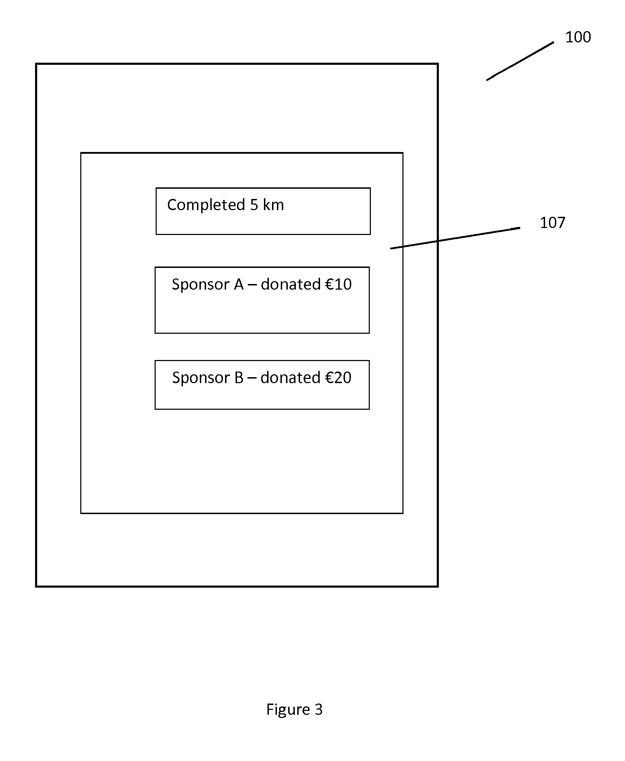

The 'event donator' application on the mobile device 100 may be configured to contain all the event details. The application may be configured to track the progress of the participant and collect progress data indicating the progress of the participant in the event. The progress data may comprise at least one of a distance and location associated with the event. The application may then be configured to compare the progress data with the predetermined characteristic that the event participant needs to complete before a donation from a sponsor to a charity will be authorised. As the participant progresses through the event, a donation transaction from the sponsor is authorised when the progress data matches the predetermined characteristic. For example, if the event comprises a 10km run, and the event participant reaches the 1 km point on the course matching the predetermined event route, a donation transaction from the sponsor is authorised for the pledge amount for 1 km. Further transactions may be effected if and when the participant reaches the 2, 3, 4 km markers, and so on. As the donation transactions are effected, as per the examples above, the event participant's social media account may be updated to state the progress of the event participant in the event so far. For example, the event participant's social media account may be updated to state the distance travelled and the total amount donated so far. Each individual sponsor's social media account may also be updated to state the progress of the event participant in the event so far. For example, each individual sponsor's social media account may also be updated with the distance travelled and the amount they have sponsored so far. In this manner, while the event in progress, social media accounts can be updated on a real-time basis to show the amount of money donated so far. Figure 3 is a diagram depicting an example of social media updates displayed on a user interface 100 of a mobile device 100, according to an embodiment of the present disclosure.

Once the event participant completes the event, the total amount donated may be published on the social media site of the event participant. The total amount donated by each individual sponsor may also be posted to the social media site of each sponsor. In this manner, the burden of having to collect money from multiple sponsors is avoided.

In another embodiment, the 'event donator' app may be used for mountain climbing or orienteering. Instead of using GPS to track distance, the application may be used to track location or altitude. For instance, the event may comprise a charity mountain climbing event in which the objective is to reach the top of the mountain. A climber posts the event details on their social media account. Sponsorship is based on the objective that the climber will get to the top. The coordinates and altitudes of most mountain tops are readily available. As the climber climbs the mountain the location or altitude of the climber may be determined using a GPS device or altimeter. If the coordinates or altitude of the climber match the coordinates of the mountain top, then the application triggers the transactions. In the example of a mountain climb, sponsorship may also be pledged according to the altitude reached by the event participant. For example, if the event is a charity climb of Kilimanjaro which has a height of 5895 m, sponsorship may be based on the climber reaching certain altitudes. Sponsorship may be pledged based on the climber reaching certain intermediate heights along the climb and also the summit. If the climber reaches a first intermediate height, for example, 4000 m, a first sponsorship amount may be authorised to be transacted, and if the climber reaches a second intermediate height, for example, 5000 m, a second sponsorship amount may be authorised to be transacted. Similarly, if the climber reaches the summit, a third sponsorship amount may be authorised to be transacted.

Transactions from sponsors may be effected by bank transfer in the following manner. As mentioned previously, a sponsor pledging an amount for the event participant and thus ultimately to complete a transaction can access a social media account of the event participant on the computing device 300. The social media account of the event participant contains a link to the secure website with the event details. The event details may contain bank account details of the event participant or bank account details of the charity or cause to which the sponsorship is to be donated. This is known as the receiving bank. In other words, the receiving bank may be a bank with which a bank account of the event participant is held, or a bank with which a bank account of the charity or cause is held. The sponsor can then access the secure website via the computing device 300 and enter their own details. A sponsor can register their personal details, with their payment details and their sponsorship pledge. In this regard, the sponsor may enter a bank card number together with other card details (such as card expiry date, card code verification (CCV) number, etc.). The sponsor's bank may transmit a message, via a secure system, for example the MasterCard ® Banknet™ network, to the recipient bank, requesting that it effect payment according to the instructions provided. The message may include settlement instructions. That is, the settlement instructions may contain a condition which triggers the money to transfer from the sponsor's account to a recipient's account. The recipient may be a bank having a bank account of the event participant or a bank having a bank account of the charity or cause associated with the event. As described above, the condition may comprise one or more of the event progress data matching the corresponding predetermined characteristic that an event participant needs to complete before a donation is authorised. The recipient may then transmit an authorisation request via a payment card network to a bank or issuer used to make the payment. The authorisation request includes a confirmation that the one or more of the event progress data matches the corresponding predetermined event data.

The issuer processes the received request and determines whether or not the request is allowable. If the issuer determines that the payment request is allowable, an authorization response is transmitted via the payment card network and transfer of the payment amount to the recipient's account is initiated. Responsive to receiving the authorization response from the issuer, a financial institution that facilitates and processes card payments made to the recipient communicates the authorisation response to the recipient. In this manner, a transaction may be effected from the sponsor to the recipient.

As described above, mobile computing devices such as smartphones and tablets may be configured to run an application which implements the methods of the present disclosure. For example, the methods may be primarily aimed at users of mobile devices such as smartphones. The methods may be embodied as part of an application or 'app' on a mobile device.

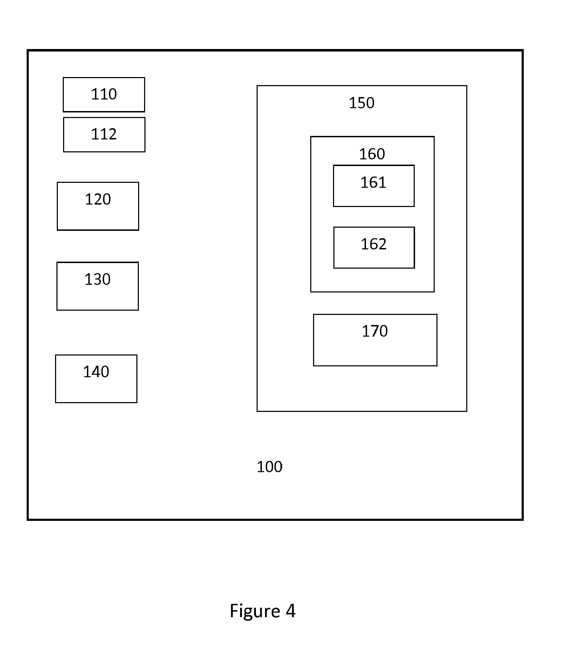

Figure 4 is a block diagram illustrating a configuration of the mobile device 100 according to an embodiment of the present disclosure. The mobile device 100 includes various hardware and software components that function to perform the methods according to the present disclosure. The mobile device 100 can be used by an event participant and a sponsor. Referring to Figure 4, the mobile device 100 comprises a user interface 110, a processor 120 in communication with a memory 150, and a communication interface 130. The processor 120 functions to execute software instructions that can be loaded and stored in the memory 150. The processor 120 may include a number of processors, a multi-processor core, or some other type of processor, depending on the particular implementation. The memory 150 may be accessible by the processor 120, thereby enabling the processor 120 to receive and execute instructions stored on the memory 150. The memory 150 may be, for example, a random access memory (RAM) or any other suitable volatile or non-volatile computer readable storage medium. In addition, the memory 150 may be fixed or removable and may contain one or more components or devices such as a hard drive, a flash memory, a rewritable optical disk, a rewritable magnetic tape, or some combination of the above.

One or more software modules 160 may be encoded in the memory 150. The software modules 160 may comprise one or more software programs or applications having computer program code or a set of instructions configured to be executed by the processor 120. Such computer program code or instructions for carrying out operations for aspects of the systems and methods disclosed herein may be written in any combination of one or more programming languages.

The software modules 160 may include a GPS tracking app 161 and one or more social media apps 162 configured to be executed by the processor 120. The software modules may comprise an 'event donator' app as described above. The 'event donator' app may have GPS functionality and capability to interact with social media applications. During execution of the software modules 160, the processor 120 configures the mobile device 100 to perform various operations relating to the facilitating and processing of transactions according to embodiments of the present disclosure, as has been described above. For example, the mobile device 100 may be configured to track the progress of an event participant in an event using the GPS tracking app 161. In another example, the software modules 160 may include an altimeter app.

Other information and/or data relevant to the operation of the present systems and methods, such as a database 170, may also be stored on the memory 150. The database 170 may contain and/or maintain various data items and elements that are utilized throughout the various operations of the contactless payment system described above. The information stored in the database 170 may include but is not limited to, banking card details and billing information unique to the event participant or sponsor and/or payment method, personal information for each consumer, banking information and a history of transactions by the consumer. One or more digital wallets may be stored in the database 170. It should be noted that although the database 170 is depicted as being configured locally to the mobile device 100, in certain implementations the database 170 and/or various other data elements stored therein may be located remotely. Such elements may be located on a remote device or server - not shown, and connected to the mobile device 100 through a network in a manner known to those skilled in the art, in order to be loaded into a processor and executed.

Further, the program code of the software modules 160 and one or more computer readable storage devices (such as the memory 150) form a computer program product that may be manufactured and/or distributed in accordance with the present disclosure, as is known to those of skill in the art.

The communication interface 140 is also operatively connected to the processor 120 and may be any interface that enables communication between the mobile device 100 and external devices, machines and/or elements including the networked computing device 300 and the server computing device 200. The communication interface 140 is configured for transmitting and/or receiving data. For example, the communication interface 140 may include but is not limited to a Bluetooth, or cellular transceiver, a satellite communication transmitter/receiver, an optical port and/or any other such, interfaces for wirelessly connecting the mobile device 100 to the networked computing device 300 and the server computing device 200.

The user interface 110 is also operatively connected to the processor 120. The user interface may comprise one or more input device(s) such as switch(es), button(s), key(s), and a touchscreen.

The user interface 110 functions to allow the entry of certain information about the user and event as discussed above, and to allow posting of event details and transmittal and receipt of social media updates. The user interface 110 functions to facilitate the capture of commands from the user such as an on-off commands or settings related to operation of the above-described methods.

A display 112 may also be operatively connected to the processor 120. The display 112 may include a screen or any other such presentation device that enables the user to view various options, parameters, and results. The display 112 may be a digital display such as an LED display. The user interface 110 and the display 112 may be integrated into a touch screen display.

The operation of the mobile device 100 and the various elements and components described above will be understood by those skilled in the art with reference to the method and system for effecting sponsorship transactions according to the present disclosure.

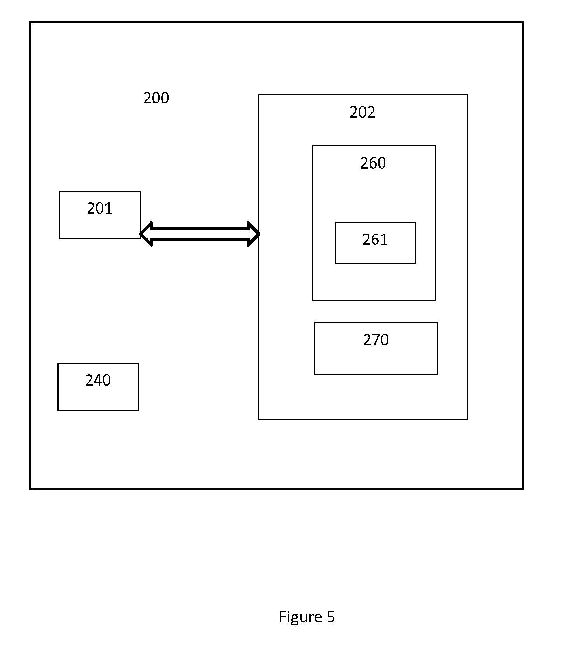

Figure 5 is a block diagram illustrating a configuration of the server computing device 200 for performing method steps according to embodiments of the present disclosure. The server computing device 200 includes various hardware and software components that function to perform the methods according to the present disclosure. Referring to Figure 5, the server computing device 200 comprises a processor 201 in communication with a memory 202, and a communication interface 240. The processor 201 functions to execute software instructions that can be loaded and stored in the memory 202. The processor 201 may include a number of processors, a multi-processor core, or some other type of processor, depending on the particular implementation. The memory 202 may be accessible by the processor 201, thereby enabling the processor 201 to receive and execute instructions stored on the memory 202. The memory 202 may be, for example, a random access memory (RAM) or any other suitable volatile or non-volatile computer readable storage medium. In addition, the memory 202 may be fixed or removable and may contain one or more components or devices such as a hard drive, a flash memory, a rewritable optical disk, a rewritable magnetic tape, or some combination of the above.

One or more software modules 260 may be encoded in the memory 202. The one or more software modules 260 may comprise one or more software programs or applications 261 having computer program code or a set of instructions configured to be executed by the processor 201. Such computer program code or instructions for carrying out operations for aspects of the systems and methods disclosed herein may be written in any combination of one or more programming languages.

The one or more software modules 260 may include an application 261 configured to be executed by the processor 201. During execution of the application 261, the processor 201 configures the cloud server 200 to perform various operations relating to the facilitating and processing of steps according to embodiments of the present disclosure, as has been described above.

Other information and/or data relevant to the operation of the present systems and methods, such as a database 270, may also be stored on the memory 202. The database 270 may contain and/or maintain various data items and elements that are utilized throughout the various operations of the system described above. The information stored in the database 270 may include event data as described above, and event progress data collected by a mobile device of the event participant. The event progress data is compared to the event data. It should be noted that although the database 270 is depicted as being configured locally to the server computing device 200, in certain implementations the database 270 and/or various other data elements stored therein may be located remotely. Such elements may be located on a remote device or server - not shown, and connected to the server computing device 200 through a network in a manner known to those skilled in the art, in order to be loaded into a processor and executed.

Further, the program code of the software modules 260 and one or more computer readable storage devices (such as the memory 202) form a computer program product that may be manufactured and/or distributed in accordance with the present disclosure, as is known to those of skill in the art.

The communication interface 240 is also operatively connected to the processor 201 and may be any interface that enables communication between the server computing device 200 and external devices, machines and/or elements including GPS-enabled mobile devices of the event participants used during events. The communication interface 240 is configured for transmitting and/or receiving data. For example, the communication interface 240 may include but is not limited to a Bluetooth, or cellular transceiver, a satellite communication transmitter/receiver, an optical port and/or any other such, interfaces for wirelessly connecting the server computing device 200 to one or more external mobile devices. Event progress data received from the mobile device 100 may be communicated to the server computing device 200 via the communication interface 240.

The operation of the server computing device 200 and the various elements and components described above will be understood by those skilled in the art with reference to the methods and systems according to the present disclosure. The present disclosure provides a computer-implemented method and system for effecting sponsorship transactions.

The present disclosure is not limited to the embodiment(s) described herein but can be amended or modified without departing from the scope of the present disclosure. Additionally, it will be appreciated that in embodiments of the present disclosure some of the above-described steps may be omitted and/or performed in an order other than that described.

## Claims

1. A computer-implemented method for triggering an online transaction in response to a physical activity of a user, the method comprising:
monitoring the physical activity of the user via at least one sensor; and
authorising an online transaction from at least one source account to a recipient account in response to the monitored physical activity matching at least one predetermined characteristic.

2. The method of claim 1, wherein the at least one predetermined characteristic comprises at least one of a distance parameter, a time parameter, a personal best parameter, a speed parameter, a measured parameter, an acceleration parameter, a deceleration parameter, a tracked parameter, a progress parameter, a heart rate parameter, a biological parameter, or an altitude parameter.

3. The method of any preceding claim, wherein the at least one predetermined characteristic is set by a sponsor associated with the source account.

4. The method of any preceding claim, wherein the physical activity is monitored in real-time.

5. The method of any preceding claim, wherein at least one of the at least one sensor is carried by the user while the user completes the physical activity.

6. The method of any preceding claim, wherein at least one of the at least one sensor is located remotely of the user.

7. The method of any preceding claim, wherein at least one of the at least one sensor is a global positioning sensor (GPS).

8. The method of any preceding claim, further comprising comparing the monitored physical activity with the at least one predetermined characteristic, and optionally being configured in one of the following ways:
wherein the online transaction is triggered in real-time once the monitored physical activity matches the at least one predetermined characteristic; or
wherein the online transaction is triggered after a time delay from when the monitored physical activity matches the at least one predetermined characteristic.

9. The method of any preceding claim, further comprising updating a social media platform to indicate a status of the online transaction, and being configured in at least one of the following ways:
wherein updating the social media platform comprises publishing information indicative of the status of the online transaction to a social media account of the user; and
wherein updating the social media platform comprises publishing information indicative of the status of the online transaction to a social media account of a sponsor associated with the source account.

10. The method of any preceding claim, wherein the monitored physical activity comprises progress data.

11. The method of any preceding claim, wherein the online transaction includes an amount calculated based on the monitored physical activity of the user, and optionally wherein the online transaction includes an amount calculated based on the progress data.

12. The method of any preceding claim, wherein the at least one predetermined characteristic is set by a sponsor associated with the source account, and optionally wherein the at least one predetermined characteristic is set by the sponsor using an online interface.

13. The method of any preceding claim, wherein authorising the online transaction comprises:
receiving payment details from the one or more sponsors;
transmitting the payment details to a financial transaction facilitator; and
transmitting an authorisation request to a financial institution of the one or more sponsors.

14. A computing system configured for triggering an online transaction in response to a physical activity of a user, the computing system comprising:
a memory; and
one or more processors configured to:
monitor the physical activity of the user via at least one sensor; and
authorise an online transaction from at least one source account to a recipient account in response to the monitored physical activity matching at least one predetermined characteristic.

15. A computer-readable medium comprising non-transitory instructions which, when executed, cause one or more processors to carry out a method comprising:
monitoring a physical activity of a user via at least one sensor; and
authorising an online transaction from at least one source account to a recipient account in response to the monitored physical activity matching at least one predetermined characteristic.
